# FASCICULE DE BREVET EUROPEEN

(11) **EP 2 616 715 B1**
(45) Date de publication et mention de la délivrance du brevet: **06.07.2016**
(21) Numéro de dépôt: 11757378.2
(22) Date de dépôt: 02.08.2011
(51) Int. Cl.: F16H 61/02, F16H 61/12, F16H 63/42

(54) **PROCEDE DE COMMANDE DE L'AFFICHAGE AU TABLEAU DE BORD DES RAPPORTS DE TRANSMISSION D'UNE BOITE DE VITESSE AUTOMATIQUE ET SYSTEME ASSOCIE**
VERFAHREN ZUR STEUERUNG DER ARAMTURENANZEIGE DER ÜBERSETZUNGSVERHÄLTNISSE EINES AUTOMATIKGETRIEBES UND ZUGEHÖRIGES SYSTEM
METHOD FOR CONTROLLING THE DASHBOARD DISPLAY OF THE TRANSMISSION RATIOS OF AN AUTOMATIC GEARBOX, AND RELATED SYSTEM

(30) Priorité: 17.09.2010 FR 1057440
(43) Date de publication de la demande: 24.07.2013
(73) Titulaire: Renault S.A.S., 92100 Boulogne-Billancourt (FR)
(72) Inventeur: PLANCHE, Grégory, F-91400 Orsay (FR); BORSOTTO, Bastien, F-83300 Draguignan (FR)
(86) Numéro de dépôt international: PCT/FR2011/051855
(87) Numéro de publication internationale: WO 2012/035227

(56) Documents cités:
- EP-A2- 0 291 183
- EP-A2- 1 022 494
- US-A- 4 414 863
- US-A- 4 930 081
- US-A- 5 521 818
- US-A1- 2009 195 375

## Description

L'invention concerne d'une manière générale la commande de l'affichage au tableau de bord des rapports de transmission d'un véhicule automobile équipé d'une boîte de vitesse automatique, et plus particulièrement, la gestion de l'affichage des rapports indisponibles.

Un système de commande de boite de vitesse automatisée pour véhicule automobile, capable d'afficher un rapport de vitesse souhaité et un rapport de vitesse réel est décrit dans le document US 2009/1 95375, qui est considéré comme l'art antérieur le plus proche.

Une des particularités d'une boîte de transmission automatisée à deux arbres d'entrées et deux embrayages d'un véhicule automobile est que les actionneurs sont tous électriques et que, par conception, il existe une concurrence plus élevée de perdre un rapport que sur d'autres types de transmission. Mais ce problème apparaît aussi sur les autres types de transmission.

Ces interdictions de rapport de transmission peuvent apparaître et disparaître de manière fugitive en cours de roulage et sont susceptibles de concerner un ou plusieurs rapports.

Selon cette hypothèse, lorsque les lois de passage réalisent une demande de rapport avec toutes les conditions nécessaires pour que celle-ci soit acceptée, il est possible que le rapport préconisé ne soit plus disponible.

Une commande des rapports de transmission propose alors au conducteur le meilleur choix possible de rapport en fonction de la demande initiale de rapport, des conditions de roulage, et de la connaissance de l'ensemble des rapports indisponibles.

En parallèle, et surtout lorsque le conducteur fait fonctionner la boîte de vitesse en mode manuel, l'affichage au tableau de bord des rapports de transmission peut s'en trouver perturber. En mode manuel, le conducteur doit pouvoir visualiser sa demande de rapport, savoir si la demande est acceptée et connaître le rapport réellement appliqué par la boîte.

Une boîte de vitesse automatique, par exemple de type transmission automatisée à deux arbres d'entrées et deux embrayages (plus connu sous le nom de transmission DC4), opère de manière à ce que, si un rapport demandé en mode manuel se trouve être inhibé, c'est-à-dire indisponible, alors les lois auto adaptatives font directement clignoter le rapport de transmission final, c'est-à-dire le rapport de transmission réellement appliqué.

La demande du conducteur n'est pas affichée au tableau de bord, ce qui peut perturber le conducteur. En effet, le conducteur ne reçoit aucune information au niveau du tableau de bord lui permettant de vérifier si sa demande initiale a été bien prise en compte. Le conducteur peut alors imaginer que le rapport appliqué par la transmission soit une conséquence d'une mauvaise manipulation de sa part.

Selon un mode de réalisation et de mise en oeuvre, il est proposé un procédé de gestion de l'affichage des rapports de transmission au tableau de bord dans le cadre de fonctionnement normal et dégradé tenant compte des rapports indisponibles et pouvant s'appliquer à tous les types de transmissions automatiques, en mode manuel ou automatique, comprenant une réception d'un signal relatif à l'indisponibilité des rapports de transmission.

Selon un aspect, il est proposé, dans un mode de réalisation, un système de commande de l'affichage au tableau de bord des rapports de transmission d'un véhicule automobile équipé d'une boîte de vitesse automatique et d'un système de commande des rapports de transmission recevant des informations relatives aux rapports de transmission indisponibles.

Selon une caractéristique générale, le système comprend des moyens de commande de l'affichage du rapport de transmission au tableau de bord, et des moyens de commande de l'affichage d'indisponibilité du rapport de transmission affiché au tableau de bord.

De préférence, le système comprend des moyens de sélection du rapport de transmission à afficher en fonction de la disponibilité du rapport de transmission demandé.

Avantageusement, le système peut comprendre des moyens de traitement préliminaire 1 aptes à mettre en phase les signaux utilisés pour la détermination du rapport de transmission à afficher au tableau de bord avec le signal relatif au rapport réellement applique et le signal relatif au rapport de transmission brut.

Les signaux utilisés pour la détermination du rapport de transmission à afficher au tableau de bord peuvent comprendre un signal relatif au rapport de transmission demandé, un signal booléen indiquant qu'une demande de changement de rapport de transmission est mémorisé. Ils peuvent aussi comprendre un signal booléen indiquant une impulsion sur les palettes pour une demande d'un rapport de transmission montant, un signal booléen indiquant une impulsion sur le levier pour une demande d'un rapport de transmission montant, un signal booléen indiquant une impulsion sur les palettes pour une demande d'un rapport de transmission rétrograde, un signal booléen indiquant une impulsion sur le levier pour une demande d'un rapport de transmission rétrograde.

Les moyens de commande de l'affichage d'indisponibilité peuvent avantageusement comprendre un module d'activation apte à activer un signal d'indisponibilité du rapport de transmission affiché au tableau de bord pendant un délai de temporisation si le rapport de transmission affiché est globalement indisponible.

L'indisponibilité du rapport de transmission affiché au tableau de bord peut être exprimée en faisant clignoter le rapport de transmission affiché au tableau de bord, par exemple. D'autres moyens visuels ou sonores peuvent être utilisés.

Le rapport de transmission affiché au tableau de bord clignotera, s'il est globalement indisponible, c'est-à-dire s'il ne peut pas être passé car les conditions de vitesse ne sont pas vérifiées ou bien parce que le rapport demandé est indisponible suite à des problèmes d'actionneurs par exemple.

Les moyens de commande de l'affichage du rapport de transmission au tableau de bord peuvent avantageusement comprendre au moins un module de temporisation apte à commander l'affichage du rapport de transmission réellement appliqué à l'issue d'un délai de temporisation si le rapport de transmission brut est indisponible.

Ces modules de temporisation, activés si respectivement les variables internes de sélection *a* et/ou *b* sont actives, c'est-à-dire non nul, permettent de réinitialiser ces variables internes à l'issue d'un délai de temporisation et ainsi d'afficher le rapport de transmission réellement appliqué à l'issue du délai de temporisation. L'activation de ces deux variables internes *a* et *b* permet d'afficher le rapport de transmission indisponible à afficher.

Selon un autre aspect, il est proposé, dans un mode de mise en oeuvre, un procédé de commande de l'affichage au tableau de bord des rapports de transmission d'un véhicule automobile équipé d'une boîte de vitesse automatique et d'un système de commande des rapports de transmission recevant des informations relatives aux rapports de transmission indisponibles.

Selon une caractéristique générale, le procédé comprend une commande de l'affichage du rapport de transmission au tableau de bord, et une commande d'un affichage d'indisponibilité du rapport de transmission affiché au tableau de bord.

De préférence, le procédé comprend une sélection du rapport de transmission à afficher en fonction de la disponibilité du rapport de transmission demandé.

Le procédé comprend préférentiellement une mise en phase les signaux utilisés pour la détermination du rapport de transmission à afficher au tableau de bord avec le signal relatif au rapport réellement applique et le signal relatif au rapport de transmission brut. Les signaux utilisés pour la détermination du rapport de transmission à afficher au tableau de bord peuvent comprendre un signal relatif au rapport de transmission demandé, un signal booléen indiquant qu'une demande de changement de rapport de transmission est mémorisé, un signal booléen indiquant une impulsion sur les palettes pour une demande d'un rapport de transmission montant, un signal booléen indiquant une impulsion sur le levier pour une demande d'un rapport de transmission montant, un signal booléen indiquant une impulsion sur les palettes pour une demande d'un rapport de transmission rétrograde, un signal booléen indiquant une impulsion sur le levier pour une demande d'un rapport de transmission rétrograde.

Avantageusement, le procédé peut comprendre une activation d'un signal d'indisponibilité du rapport de transmission affiché au tableau de bord pendant un délai de temporisation si le rapport de transmission affiché est indisponible.

Le procédé peut également comprendre une commande de l'affichage du rapport de transmission réellement appliqué à l'issue d'un délai de temporisation si le rapport de transmission brut est indisponible.

D'autres avantages et caractéristiques de l'invention apparaîtront à l'examen de la description détaillée de modes de mise en oeuvre et de modes de réalisation, nullement limitatifs, et des dessins annexés, sur lesquels :
- La figure 1 représente schématiquement un exemple de système de commande de l'affichage au tableau de bord des rapports de transmission d'un véhicule automobile équipé d'une boîte de vitesse automatique selon un mode de mise de réalisation de l'invention ;
- La figure 2 présente un organigramme d'un procédé simplifié de commande de l'affichage des rapports de transmission selon un premier mode de mise en oeuvre de l'invention ;
- La figure 3 représente schématiquement un exemple d'une partie des moyens de sélection du rapport de transmission à afficher en fonction de la disponibilité du rapport de transmission ;
- La figure 4 représente schématiquement un exemple d'une partie des moyens de commande de l'affichage du rapport de transmission au tableau de bord ;
- La figure 5 représente schématiquement un exemple d'une partie des moyens de commande de l'affichage d'indisponibilité du rapport de transmission au tableau de bord.

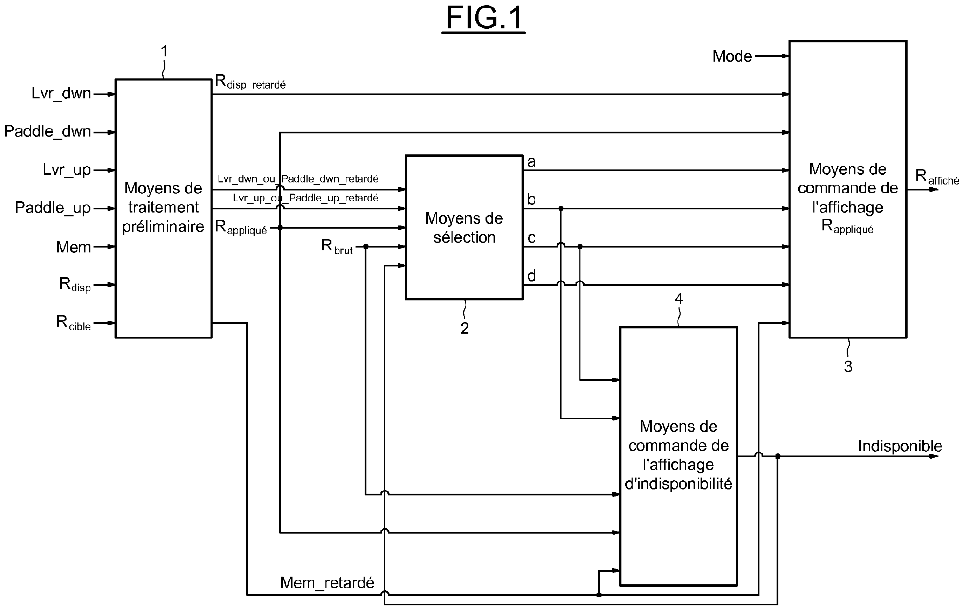

La figure 1 représente de manière schématique un exemple de système de commande de l'affichage au tableau de bord des rapports de transmission d'un véhicule automobile équipé d'une boîte de vitesse automatique selon un mode de réalisation de l'invention.

Le système de commande de l'affichage au tableau de bord comprend des moyens de traitement préliminaire 1 permettant de mettre en phase les signaux utilisés pour la détermination du rapport de transmission à afficher au tableau de bord, des moyens de sélection 2 du rapport de transmission à afficher en fonction de la disponibilité du rapport de transmission, des moyens de commande de l'affichage 3 du rapport de transmission au tableau de bord, et des moyens de commande de l'affichage d'indisponibilité 4 du rapport de transmission au tableau de bord.

Les moyens de traitement préliminaire 1 reçoivent en entrée des signaux utilisés pour la détermination du rapport de transmission à afficher au tableau de bord et à mettre en phase et un signal de variable interne, le signal relatif au rapport cible en sortie des lois de passages en mode manuel, *R_{cible}.*

Les signaux à mettre en phase comprennent un signal relatif au rapport de transmission demandé par le conducteur, *R_{disp},* un signal booléen indiquant si une demande de changement de rapport est mémorisée, *Mem,* un signal booléen indiquant une impulsion sur le levier pour une demande de rapport de transmission montant, *Lvr_up,* un signal booléen indiquant une impulsion sur les palettes pour une demande de rapport montant, *Paddle_up,* un signal booléen indiquant une impulsion sur le levier pour une demande de rapport de transmission rétrograde, *Lvr_dwn,* un signal booléen indiquant une impulsion sur les palettes pour une demande de rapport rétrograde, *Paddle_dwn.*

Les moyens de traitement préliminaire 1 retardent ainsi ces six signaux afin de les mettre en phase avec un signal relatif au rapport de transmission brut, *R_{brut},* demandé en sortie des lois de passage en mode manuel et un signal relatif au rapport de transmission réellement appliqué, *R_{appliqué}.* Ces deux derniers signaux sont obtenues en sortie des lois de passage en mode manuel, c'est-à-dire après que les conditions de vitesse pour le rapport de transmission demandé, *R_{disp},* aient été vérifiées.

Au moment d'une demande d'un rapport de transmission montant ou rétrograde par le levier ou les palettes, une temporisation est lancée pour déterminer si le conducteur réalise une seule ou plusieurs demandes de changements de rapports de transmission. Le signal relatif au rapport de transmission brut, *R_{brut},* et le signal relatif au rapport de transmission réellement appliqué, *R_{appliqué},* sont donc retardés en sortie des lois de passage, par rapport au moment de l'impulsion sur la palette ou le levier, de la valeur de calibration d'une temporisation.

Les moyens de traitement préliminaire 1 permettent ainsi de générer un retard correspondant à la valeur de calibration de ladite temporisation pour une demande de rapport de transmission montant ou rétrograde.

Pour créer un tel retard, un commutateur multi-port peut être utilisé. Ce commutateur multi-port permet de sélectionner, en fonction de la valeur de la calibration de la temporisation, le nombre de retard unitaire à intégrer entre le signal d'entrée et de sortie.

Une condition supplémentaire est intégrée au fonctionnement des moyens préliminaire de traitement 1. En effet, si le rapport de transmission demandé correspond au rapport de transmission maximal possible de la boîte de vitesse, la temporisation n'est pas lancée et le rapport est directement demandé par les lois de passage. Cette condition est vérifiée à l'aide de la variable interne correspondant au rapport de transmission cible, *R_{cible}*, en sortie des lois de passage dans un module de gestion du mode manuel par exemple.

Sur la figure 1, seule quatre sorties des moyens de traitement préliminaire 1 ont été représentées. Le signal retardé relatif au rapport de transmission demandé, *R_{disp_retardé},* le signal booléen retardé indiquant si une demande de changement de rapport est mémorisée, *Mem_retardé,* un signal booléen retardé indiquant une impulsion sur le levier ou sur les palettes pour une demande de rapport de transmission montant, *Lvr*_*up*_*or*_*Paddle*_*up*_*retardé*, un signal booléen retardé indiquant une impulsion sur le levier ou sur les palettes pour une demande de rapport rétrograde, *Lvr_dwn_or_Paddle_dwn_retardé,* ceci du fait qu'il ne peut y avoir un signal sur le levier et sur les palettes en même temps, et que l'un ou l'autre des signaux pour un même rapport de transmission aura un effet similaire.

Les moyens de sélection 2 reçoivent ainsi en entrée le signal booléen retardé indiquant une impulsion sur le levier ou sur les palettes pour une demande de rapport de transmission montant, *Lvr*_*up*_*or*_*Paddle*_*up*_*retardé*, le signal booléen retardé indiquant une impulsion sur le levier ou sur les palettes pour une demande de rapport rétrograde, *Lvr_dwn_or_Paddle_dwn_retardé,* le signal relatif au rapport de transmission réellement appliqué, *R_{appliqué},* le signal relatif au rapport de transmission brut, *R_{brut},* et un signal booléen de sortie des moyens de commande de l'affichage d'indisponibilité 4 du rapport de transmission indiquant si le rapport de transmission affiché est indisponible, *Indisponible,* ce signal de sortie correspondant ici à l'affichage du rapport précédent.

Les moyens de sélection 2 déterminent alors, à partir des signaux en entrée, quatre variables internes *a* à *d* permettant d'activer l'affichage du rapport de transmission au tableau de bord et l'éventuel affichage d'indisponibilité, c'est-à-dire, dans ce mode de réalisation, le clignotement, du rapport de transmission affiché.

Ces quatre variables internes *a* à *d* sont alors délivrées aux moyens de commande de l'affichage 3. Le signal de sortie des moyens de commande de l'affichage 3 relatif au rapport de transmission à afficher au tableau de bord est une combinaison de l'état des quatre variables internes *a* à *d* et du mode de conduite (automatique ou manuel).

Ainsi, le rapport affiché au tableau de bord pourra être complété de la mention *Auto,* pour un fonctionnement en mode automatique, et de la mention *M*, pour un fonctionnement en mode manuel, la mention Auto pouvant être affichée seulement lorsque la requête de changement de rapport provient des palettes en mode automatique.

Le signal de sortie, *R_{affiché},* des moyens de commande de l'affichage 3 peut également indiquer d'afficher les mentions *Off,* lorsque le modteur est coupé, *Neutral,* lorsque le véhicule est au *neutre, S range,* lorsque le mode sport est activé, et *D range,* lorsque le mode automatique est activé.

Les moyens de commande de l'affichage d'indisponibilité 4 reçoivent en entrée les variables internes *a* et *b,* ainsi que le signal relatif de transmission réellement appliqué, *R_{applique}*, le signal relatif au rapport de transmission brut, *R_{brut},* et le signal booléen retardé indiquant si une demande de changement de rapport est demandée, *Mem_retardé.*

Les moyens de commande de l'affiche d'indisponibilité 4 détermine alors à partir des signaux en entrée si le rapport affiché doit être affiché comme indisponible, c'est-à-dire s'il doit, par exemple, clignoter. L'indisponibilité du rapport affiché peut être exprimé, par exemple, par le clignotement du rapport de transmission affiché au tableau de bord. L'indisponibilité du rapport affiché pourrait également être exprimée d'une autre manière visuelle ou sonore.

Ainsi, des moyens non représentés d'affichage au tableau de bord reçoivent le signal de sortie, *R_{affiché},* des moyens de commande de l'affichage 3 indiquant quel rapport de transmission doit être affiché au tableau de bord, et le signal de sortie, *Indisponible,* des moyens de commande de l'affichage d'indisponibilité 4 indiquant si le rapport affiché au tableau de bord doit clignoter.

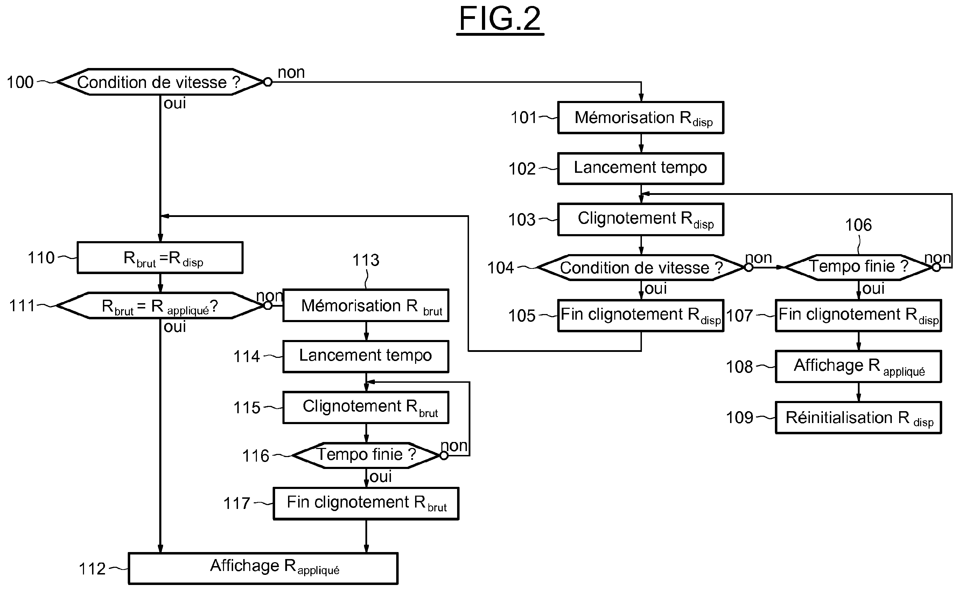

La figure 2 présente un organigramme d'un procédé simplifié de commande de l'affichage du rapport de transmission au tableau de bord.

En mode manuel, le rapport de transmission demandé, montant ou rétrograde, par le conducteur, *R_{disp},* est accepté à condition que les conditions de vitesse soient respectées pour le passage ; c'est-à-dire que la vitesse du véhicule soit supérieure à un seuil d'autorisation pour un rapport de transmission montant ou inférieur pour un rapport de transmission rétrograde. On vérifie donc dans une première étape 100.

Dans le cas où elles sont vérifiées, le rapport de transmission brut, *R_{brut}*, demandé en sortie des lois de passage correspond au rapport de transmission demandé, *R_{disp},* dans une étape 110. Ce rapport de transmission brut, *R_{brut},* est ensuite traité pour déterminer s'il est bien disponible ou non.

Si le conducteur réalise une demande de rapport de transmission montant ou rétrograde, mais que les conditions de vitesse ne sont pas satisfaites pour le changement de rapport de transmission à l'étape 100, une mémorisation de la demande de changement de rapport est lancée à l'étape 101.

Le changement de rapport de transmission peut alors encore avoir lieu si avant la fin d'une durée de mémorisation, de l'ordre de 2 secondes par exemple, les conditions de vitesse pour le changement de rapport de transmission deviennent satisfaisantes. On lance, pour cela, une temporisation de mémorisation, à une étape 102.

Pendant cette période de mémorisation, la variable booléen indiquant la mémorisation d'un changement de vitesse, *Mem,* permet de savoir que le changement de rapport de transmission est refusé. Cette information est utilisée par les moyens de commande de l'affichage d'indisponibilité 4 pour faire clignoter le rapport de transmission demandé, *R_{disp},* par le conducteur au tableau de bord, dans une étape 103.

Dans une étape 104, on vérifie à nouveau si les conditions de vitesse sont vérifiées.

Si elles le sont, on arrête de faire clignoter le rapport de transmission demandé, *R_{disp},* à une étape 105, avant de passer à l'étape 200.

Si elles ne sont pas vérifiées, on vérifie, à une étape 106, si le délai de mémorisation est fini. Si le délai n'a pas expiré, on reprend à l'étape 103. Sinon, on met fin au clignotement du rapport de transmission demandé, *R_{disp},* à une étape 107, avant de commander l'affichage du rapport réellement appliqué, *R_{appliqué},* à une étape 108, et de réinitialiser le signal relatif au rapport de transmission demandé, *R_{disp},* dans une étape 109.

Dans le cas où l'étape 110 est réalisée, on vérifie alors, dans une étape 111 si, le rapport de transmission brut, *R_{brut},* est disponible, c'est à dire s'il correspond au rapport de transmission réellement appliqué, *R_{appliqué}.* Si le rapport de transmission brut, *R_{brut},* est disponible, alors, dans une étape 112 le rapport de transmission demandé, *R_{disp},* est directement affiché et correspond au rapport de transmission réellement appliqué, *R_{appliqué}.*

Si en revanche, le rapport de transmission brut, *R_{brut},* est indisponible, c'est-à-dire que qu'il ne correspond pas au rapport de transmission réellement appliqué, *R_{appliqué},* dans l'étape 111, alors le rapport de transmission brut, *R_{brut}*, est mémorisé dans une étape 113, et une temporisation de 2 secondes, par exemple, est lancée dans une étape 114. Cette temporisation permet de retarder l'activation de cette condition. Pendant cette temporisation, le rapport de transmission demandé, *R_{disp},* par le conducteur clignote au tableau de bord, dans une étape 115. Une fois la temporisation finie dans l'étape 116, on met fin au clignotement du rapport de transmission brut, *R_{brut}*, dans une étape 117, et le rapport réellement appliqué, *R_{appliqué},* est affiché dans l'étape 112.

Le rapport de transmission affiché au tableau de bord clignotera donc s'il ne peut pas être passé car les conditions de vitesse ne sont pas vérifiées ou si le rapport demandé est indisponible, suite à des problèmes d'actionneurs par exemple.

Un cas non représenté sur cet organigramme mais pris en compte par le système de commande selon l'invention concerne le cas où un changement de rapport de transmission est demandé par le conducteur alors que le précédent rapport demandé était indisponible.

Dans le processus de commande du mode manuel le rapport de transmission demandé, *Kᵢᵢₛp,* n'est pas réinitialisé avec le rapport réellement appliqué, *R_{appliqué},* par la boîte de vitesse mais uniquement avec la valeur du rapport de transmission brut, *R_{brut}.*

Dans cette configuration, plusieurs situations sont possibles.

Une première situation est réalisée lorsque la demande de changement de rapport de vitesse permet au rapport de transmission brut, *R_{brut}*, d'atteindre la valeur du rapport réellement appliqué, *R_{appliqué}*, sans pour autant que le rapport réellement appliqué, *R_{appliqué},* ne change par rapport au précédent rapport réellement appliqué, *R_{appliqué-1}.*

Dans le cas d'une demande de rapport de transmission montant, il faut alors faire afficher et clignoter le rapport de transmission directement supérieur au rapport réellement affiché, *R_{appliqué}*+*1*, et dans le cas d'une demande de rapport de transmission rétrograde, il faut alors faire afficher et clignoter le rapport de transmission directement inférieur au rapport réellement affiché, *R_{appliqué}*-*1*. A l'issue du délai de temporisation l'affichage changera pour afficher le rapport de transmission réellement appliqué, *R_{appliqué},* au tableau de bord sans clignotement.

Cette première situation correspond au cas où le rapport de transmission réellement appliqué, *R_{appliqué},* est égal au précédent rapport de transmission réellement appliqué, *R_{appliqué-1}*, et le rapport de transmission réellement appliqué, *R_{appliqué}*, correspond au rapport de transmission brut, *R_{brut},* et le rapport de transmission réellement appliqué, *R_{appliqué},* diffère du précédent rapport de transmission brut, *R_{brut-1}*, et une demande de rapport de transmission rétrograde ou montant.

Cette première situation correspond, par exemple, à une situation dans laquelle, alors que le véhicule automobile roule dans un rapport de transmission deux, une demande de rapport de transmission montant, soit un rapport de transmission trois, est réalisée. Cependant, le rapport de transmission trois est indisponible, mais il est possible d'effectuer un changement de rapport en rapport de transmission quatre ou cinq.

A la première demande de rapport de transmission montant, la boîte de vitesse change de rapport et passe en quatrième ; le rapport de transmission trois clignote au tableau de bord pendant un délai de temporisation avant que le rapport quatre ne soit affiché. Le rapport de transmission brut, *R_{brut}*, possède alors une valeur correspondant au rapport de transmission trois.

A la seconde demande de rapport de transmission montant, après le délai de temporisation, la boîte de vitesse ne change pas de rapport de transmission, le rapport cinq clignote au tableau de bord pendant la durée de temporisation à l'issue duquel le rapport quatre sera à nouveau affiché au tableau de bord. Le rapport de transmission brut, *R_{brut}*, possède alors une valeur correspondant au rapport de transmission quatre égale au rapport de transmission réellement appliqué, *R_{appliqué}.*

Une seconde situation est réalisée lorsque la demande de changement de rapport de vitesse ne permet pas au rapport de transmission brut, *R_{brut},* d'atteindre la valeur du rapport réellement appliqué, *R_{appliqué},* du fait des conditions de vitesse qui ne sont pas respectées.

La boîte de vitesse ne change donc pas de rapport de transmission appliqué, *R_{appliqué},* et le rapport cible, *R_{cible},* n'est toujours pas à la valeur de la nouvelle demande.

Dans le cas d'une demande de rapport de transmission montant, il faut alors faire afficher et clignoter au tableau de bord le rapport de transmission directement supérieur au rapport réellement affiché, *R_{appliqué}*+*1,* et dans le cas d'une demande de rapport de transmission rétrograde, il faut alors faire afficher et clignoter au tableau de bord le rapport de transmission directement inférieur au rapport réellement affiché, *R_{appliqué}*-*1 .* A l'issue du délai de temporisation l'affichage changera pour afficher le rapport de transmission réellement appliqué, *R_{appliqué}*, au tableau de bord sans clignotement.

Cette seconde situation correspond au cas où le rapport de transmission réellement appliqué, *R_{appliqué},* est égal au précédent rapport de transmission réellement appliqué, *R_{appliqué}-1,* et le rapport de transmission réellement appliqué, *R_{appliqué},* diffère du rapport de transmission brut, *R_{brut},* et le rapport de transmission brut, *R_{brut}*, est égale au précédent rapport de transmission brut, *R_{brut-1},* et une demande de rapport de transmission rétrograde ou montant.

Cette seconde situation correspond, par exemple, à une situation dans laquelle, alors que le véhicule automobile roule dans un rapport de transmission deux, une demande de rapport de transmission montant, soit un rapport de transmission trois, est réalisée. Cependant, le rapport de transmission trois est indisponible, et il est impossible d'effectuer un changement de rapport en rapport de transmission quatre car les conditions de vitesse ne sont pas respectées pour ce rapport de transmission quatre.

A la première demande de rapport de transmission montant, la boîte de vitesse ne change pas de rapport de transmission, le rapport de transmission trois clignote au tableau de bord pendant un délai de temporisation avant que le rapport de transmission deux ne soit affiché. Le rapport de transmission brut, *R_{brut},* possède alors une valeur correspondant au rapport de transmission trois.

A la seconde demande de rapport de transmission montant, après le délai de temporisation, la boîte de vitesse ne change pas de rapport de transmission, le rapport trois clignote au tableau de bord pendant la durée de temporisation à l'issue duquel le rapport de transmission deux sera à nouveau affiché au tableau de bord. Le rapport de transmission brut, *R_{brut},* possède alors une valeur correspondant au rapport de transmission quatre.

Dans cette situation, le rapport de transmission brut, *R_{brut},* ne reprend la valeur du rapport de transmission appliqué, *R_{appliqué},* seulement si le rapport trois devient de nouveau disponible. Sinon, le rapport de transmission brut, *R_{brut}*, est toujours différent du rapport de transmission appliqué, *R_{appliqué},* dans ces conditions de vitesse.

Enfin, une troisième situation est réalisée lorsque la demande de changement de rapport de vitesse permet au rapport de transmission brut, *R_{brut}*, d'atteindre la valeur du rapport réellement appliqué, *R_{appliqué},* alors que le rapport réellement appliqué, *R_{appliqué},* change par rapport au précédent rapport réellement appliqué, *R_{appliqué-1}.*

Dans le cas d'une demande de rapport de transmission montant, il faut alors faire afficher et clignoter au tableau de bord le rapport de transmission directement inférieur au rapport réellement affiché, *R_{appliqué}-1,* et dans le cas d'une demande de rapport de transmission rétrograde, il faut alors faire afficher et clignoter au tableau de bord le rapport de transmission directement supérieur au rapport réellement affiché, *R_{appliqué}*+ *1.* A l'issue du délai de temporisation l'affichage changera pour afficher le rapport de transmission réellement appliqué, *R_{appliqué}*, au tableau de bord sans clignotement.

Cette troisième situation correspond au cas où la différence entre le rapport de transmission réellement appliqué, *R_{appliqué},* et le précédent rapport de transmission réellement appliqué, *R_{appliqué}-1,* est supérieure ou égale au nombre deux, alors qu'une demande de rapport de transmission rétrograde ou montant est réalisée.

Cette troisième situation correspond, par exemple, à une situation dans laquelle, alors que le véhicule automobile roule dans un rapport de transmission deux, une demande de rapport de transmission montant, soit un rapport de transmission trois, est réalisée. Cependant, le rapport de transmission trois est indisponible, mais il est possible d'effectuer un changement de rapport en rapport de transmission quatre ou en rapport de transmission deux.

A la suite d'une demande de rapport de transmission montant, la boîte de vitesse change de rapport de transmission pour passer en rapport de transmission quatre, le rapport de transmission trois clignote au tableau de bord pendant un délai de temporisation avant que le rapport de transmission quatre ne soit affiché. Le rapport de transmission brut, *R_{brut}*, possède alors une valeur correspondant au rapport de transmission trois.

La seconde demande de changement de rapport de transmission, après le délai de temporisation, est une demande de rapport de transmission rétrograde. La boîte de vitesse change à nouveau de rapport de transmission pour passer en rapport de transmission deux, le rapport trois clignote au tableau de bord pendant la durée de temporisation à l'issue duquel le rapport de transmission deux sera affiché au tableau de bord. Le rapport de transmission brut, *R_{brut},* possède alors une valeur égale au rapport de transmission deux correspondant au rapport de transmission réellement appliqué, *R_{appliqué}.*

La sélection du rapport de transmission à afficher au tableau de bord est réalisée par les moyens de sélection 2 selon le procédé présenté sur la figure 2 complété du cas où un changement de rapport de transmission est demandé par le conducteur alors que le précédent rapport demandé était indisponible.

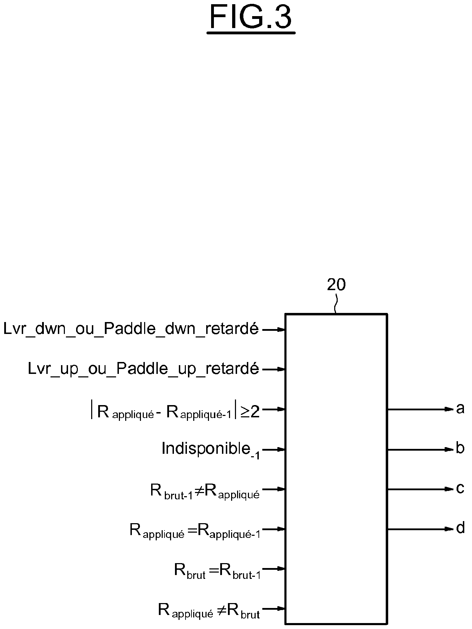

La figure 3 représente de manière schématique des moyens de sélection 2 du rapport de transmission à afficher en fonction de la disponibilité du rapport de transmission.

Les moyens de sélection 2 comprennent un module de sélection 20 comprenant une pluralité de modules logiques non représentés permettant de déterminer la valeur de variables internes *a* à *d* dont les combinaisons permettent de réaliser la commande de tous les affichages possibles par les moyens de commande de l'affichage 3 et par les moyens de commande de l'affichage d'indisponibilité 4.

Le module de sélection 20 détermine la valeur des signaux booléens représentatifs des variables internes *a* à *d* à partir d'un pluralité de signaux booléens d'entrée. Les signaux booléen d'entrée du module de sélection comprenne un signal booléen indiquant une impulsion sur le levier ou sur les palettes pour une demande de rapport de transmission montant, *Lvr*_*up*_*or*_*Paddle*_*up*_*retardé*, et un signal booléen retardé indiquant une impulsion sur le levier ou sur les palettes pour une demande de rapport rétrograde, *Lvr_dwn_or_Paddle_dwn_retardé.* Ils comprennent également un signal indiquant si la différence entre le rapport de transmission réellement appliqué, *R_{appliqué},* et le précédent rapport de transmission réellement appliqué, *R_{appliqué}-1,* est supérieure ou égale au nombre deux, |*R_{appliqué}*-*R*_{*appliqué*-1}|≥2, un signal booléen indiquant si le précédent rapport de transmission affiché est indisponible, *Indisponible₋₁.* Ils comprennent également un signal booléen indiquant si le précédent rapport de transmission brut, *R_{brut-1},* diffère du rapport de transmission réellement appliqué, *R_{appliqué},* un signal booléen indiquant si le rapport de transmission réellement appliqué, *R_{appliqué},* correspond au précédent rapport de transmission réellement appliqué, *R*_{*app*/}*_{iqué-1},* un signal booléen indiquant si le rapport de transmission brut, *R_{brut},* correspond au précédent rapport de transmission brut, *R_{brut-1},* et un signal booléen indiquant si le rapport de transmission réellement appliqué, *R_{appliqué},* diffère au rapport de transmission brut, *R_{brut}.*

Si le signal booléen relatif à la variable interne *d* est non nul en sortie du module de sélection 20, les moyens de sélection 2 lancent une temporisation correspondant à la durée de clignotement.

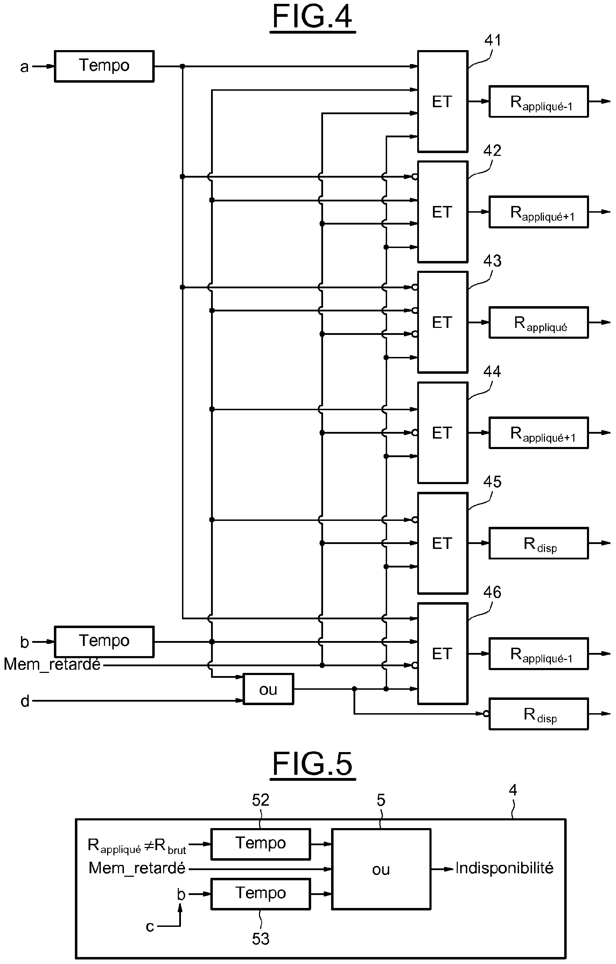

La figure 4 présente de manière schématique un exemple d'une partie des moyens de commande de l'affichage 3 du rapport de transmission au tableau de bord.

La partie des moyens de commande de l'affichage 3 présentée sur cette figure concerne la détermination du rapport de transmission à afficher. Le rapport de transmission à afficher est déterminer en fonction des signaux booléen relatifs aux variables internes *a* à *d* délivrées par les moyens de sélection 2, et du signal booléen retardé indiquant si un changement de rapport a été mémorisé, *Mem_retardé.*

Les moyens de commande de l'affichage 3 comprennent six modules logiques ET 41 à 46.

Le premier module logique ET 41 délivre un signal non nul en sortie si, à la fois, le signal booléen relatif à la variable interne *a* est non nul, le signal booléen relatif à la variable interne *b* est non nul, le signal booléen retardé relatif à la mémorisation d'un changement de rapport, *Mem_retardé,* est non nul, et au moins l'un des deux signaux booléens relatif aux variables internes *b* et *d* est non nul. Sinon, le signal délivré en sortie du premier module logique ET 41 est nul.

Si le signal délivré en sortie du premier module logique ET 41 est non nul, alors le rapport affiché au tableau de bord correspondra au rapport de transmission directement inférieur au rapport de transmission réellement appliqué, noté *R_{appliqué}-1.*

Le second module logique ET 42 délivre un signal non nul en sortie si, à la fois, le signal booléen relatif à la variable interne *a* est nul, le signal booléen relatif à la variable interne *b* est non nul, le signal booléen retardé relatif à la mémorisation d'un changement de rapport, *Mem_retardé,* est non nul, et au moins l'un des deux signaux booléens relatif aux variables internes *b* et *d* est non nul. Sinon, le signal délivré en sortie du second module logique ET 42 est nul.

Si le signal délivré en sortie du second module logique ET 42 est non nul, alors le rapport affiché au tableau de bord correspondra au rapport de transmission directement supérieur au rapport de transmission réellement appliqué, noté *R_{appliqué}*+*1*.

Le troisième module logique ET 43 délivre un signal non nul en sortie si, à la fois, le signal booléen relatif à la variable interne *a* est nul, le signal booléen relatif à la variable interne *b* est nul, le signal booléen retardé relatif à la mémorisation d'un changement de rapport, *Mem_retardé,* est nul, et au moins l'un des deux signaux booléens relatif aux variables internes *b* et *d* est non nul. Sinon, le signal délivré en sortie du troisième module logique ET 43 est nul.

Si le signal délivré en sortie du troisième module logique ET 43 est non nul, alors le rapport affiché au tableau de bord correspondra au rapport de transmission réellement appliqué, *R_{appliqué}.*

Le quatrième module logique ET 44 délivre un signal non nul en sortie si, à la fois, quelque soit la valeur du signal booléen relatif à la variable interne *a,* le signal booléen relatif à la variable interne *b* est non nul, le signal booléen retardé relatif à la mémorisation d'un changement de rapport, *Mem_retardé,* est nul, et au moins l'un des deux signaux booléens relatif aux variables internes *b* et *d* est non nul. Sinon, le signal délivré en sortie du quatrième module logique ET 44 est nul.

Si le signal délivré en sortie du quatrième module logique ET 44 est non nul, alors le rapport affiché au tableau de bord correspondra au rapport de transmission directement supérieur au rapport de transmission réellement appliqué, noté *R_{appliqué}*+*1*.

Le cinquième module logique ET 45 délivre un signal non nul en sortie si, à la fois, quelque soit la valeur du signal booléen relatif à la variable interne *a,* le signal booléen relatif à la variable interne *b* est nul, le signal booléen retardé relatif à la mémorisation d'un changement de rapport, *Mem_retardé,* est non nul, et au moins l'un des deux signaux booléens relatif aux variables internes *b* et *d* est non nul. Sinon, le signal délivré en sortie du cinquième module logique ET 45 est nul.

Si le signal délivré en sortie du cinquième module logique ET 45 est non nul, alors le rapport affiché au tableau de bord correspondra au rapport de transmission demandé, *R_{disp}.*

Le sixième module logique ET 46 délivre un signal non nul en sortie si, à la fois, le signal booléen relatif à la variable interne *a* est non nul, le signal booléen relatif à la variable interne *b* est non nul, le signal booléen retardé relatif à la mémorisation d'un changement de rapport, *Mem_retardé,* est nul, et au moins l'un des deux signaux booléens relatif aux variables internes *b* et *d* est non nul. Sinon, le signal délivré en sortie du cinquième module logique ET 46 est nul.

Si le signal délivré en sortie du sixième module logique ET 46 est non nul, alors le rapport affiché au tableau de bord correspondra au rapport de transmission directement inférieur au rapport de transmission réellement appliqué, noté *R_{appliqué}-1*.

Par ailleurs, si les deux signaux booléens relatif aux variables internes *b* et *d* sont nuls, alors le rapport affiché au tableau de bord correspondra au rapport de transmission demandé, *R_{disp},* quelque soit la valeur du signal booléen relatif à la variable interne *a,* et quelque soit la valeur du signal booléen retardé relatif à la mémorisation d'un changement de rapport, *Mem_retardé.*

Les moyens de commande de l'affichage 3 comprennent également des modules de temporisation non représentés pour les signaux relatifs aux variables internes *a* et *b.* si l'un des deux signaux est non, le module de temporisation correspondant lance une temporisation, correspondant à la durée de clignotement pour maintenir le signal correspondant à 1, à l'issue de laquelle le signal correspondant sera réinitialisé à zéro. Cette réinitialisation du signal à zéro à l'issue de la temporisation permet de mettre fin à l'affichage au tableau de bord du rapport de transmission indisponible et pour afficher le rapport de transmission réellement appliqué, *R_{appliqué}.*

Enfin, si le signal booléen relatif à la variable interne c est non nul, alors les signaux booléen relatifs aux variables internes *a* et *b* sont forcés à zéro. La variable interne c permet ainsi de réinitialiser tous les cas et d'arrêter directement le clignotement de l'affichage au tableau de bord.

La figure 5 représente de manière schématique un exemple d'une partie des moyens de commande de l'affichage d'indisponibilité 4 du rapport de transmission au tableau de bord. Ces moyens de commande de l'affichage d'indisponibilité 4 permettent de commander le clignotement du rapport affiché au tableau de bord, le rapport à afficher étant commandé par les moyens de commande de l'affichage 3 du rapport de transmission au tableau de bord.

Un signal d'activation permet d'activer le clignotement, c'est-à-dire l'affichage d'indisponibilité, du rapport de transmission affiché au tableau de bord est délivré par les moyens de commande de l'affichage d'indisponibilité 3 si l'une des trois conditions est vérifiée.

Le rapport de transmission affiché clignotera si le rapport de transmission appliqué, *R_{appliqué},* est différent du rapport de transmission brut, *R_{brut},* ou bien si la variable interne b est vérifiée, c'est-à-dire, si elle est non nul, ou bien si une mémorisation de changement de rapport a lieu, c'est-à-dire si le signal booléen retardé relatif à la mémorisation d'un changement de rapport de transmission est non nul, *Mem_retardé=1.*

Pour les deux premières conditions, lorsque l'un des deux états est vérifié, une temporisation, correspondant à la durée de clignotement pour maintenir le signal correspondant à 1, est lancée à l'issue de laquelle le signal correspondant est réinitialisé à zéro. Cette réinitialisation du signal à zéro à l'issue de la temporisation permet de mettre fin au clignotement au moment où l'affichage au tableau de bord pour afficher le rapport de transmission réellement appliqué, *R_{appliqué},* à la place du rapport de transmission affiché comme indisponible.

Pour réaliser un tel processus, les moyens de commande de l'affichage d'indisponibilité 4 peuvent comprendre un module logique OU 51 délivrant en sortie le signal d'indisponibilité, *Indisponible.* Ce module logique OU 51 reçoit en entrée le signal booléen relatif à la variable interne *b*, le signal booléen retardé relatif à la mémorisation d'un changement de rapport de transmission, *Mem_retardé,* et un signal booléen indiquant si le rapport de transmission réellement appliqué, *R_{appliqué},* correspond au rapport de transmission brut, *R_{brut}.*

Ils peuvent également comprendre un premier module de réinitialisation 52 à l'issue d'un délai de temporisation et un second module de réinitialisation 53 respectivement couplés aux entrées du module logique OU 51 relatives au signal booléen indiquant si le rapport de transmission réellement appliqué, *R_{appliqué},* correspond au rapport de transmission brut, *R_{brut},* et signal booléen relatif à la variable interne *b*.

La durée d'activation du signal booléen retardé relatif à la mémorisation d'un changement de rapport de transmission, *Mem_retardé,* est gérée dans un processus de commande du mode manuel.

Les moyens de commande de l'affichage d'indisponibilité 4 reçoivent également en entrée le signal booléen relatif à la variable interne c. Si ce signal est non nul, le signal booléen relatif à la variable interne *b* est forcée à 0.

La variable interne c permet de réinitialiser tous les cas et d'arrêter directement le clignotement de l'affichage au tableau de bord.

## Revendications

1. Système de commande de l'affichage au tableau de bord des rapports de transmission d'un véhicule automobile équipé d'une boîte de vitesse automatique et d'un système de commande des rapports de transmission recevant des informations relatives aux rapports de transmission indisponibles, le système de commande de l'affichage comprenant des moyens de commande de l'affichage (3) du rapport de transmission au tableau de bord, et des moyens de commande de l'affichage d'indisponibilité (4) du rapport de transmission affiché au tableau de bord, **caractérisé en ce qu'**il comprend des moyens de traitement préliminaire 1 aptes à mettre en phase les signaux utilisés pour la détermination du rapport de transmission à afficher au tableau de bord avec le signal relatif au rapport réellement applique (R_{appliqué}) et le signal relatif au rapport de transmission brut (R_{brut}), les signaux utilisés pour la détermination du rapport de transmission à afficher au tableau de bord comprenant un signal relatif au rapport de transmission demandé (R_{dips}), un signal booléen indiquant qu'une demande de changement de rapport de transmission est mémorisé (Mem), un signal booléen indiquant une impulsion sur les palettes pour une demande d'un rapport de transmission montant (Paddle_up), un signal booléen indiquant une impulsion sur le levier pour une demande d'un rapport de transmission montant (Lvr_up), un signal booléen indiquant une impulsion sur les palettes pour une demande d'un rapport de transmission rétrograde (Paddle_dwn), un signal booléen indiquant une impulsion sur le levier pour une demande d'un rapport de transmission rétrograde (Lvr_dwn).

2. Système selon la revendication 1, **caractérisé en ce qu'**il comprend des moyens de sélection (2) du rapport de transmission à afficher en fonction de la disponibilité du rapport de transmission demandé (R_{disp}).

3. Système selon l'une des revendications 1 ou 2, **caractérisé en ce que** les moyens de commande de l'affichage d'indisponibilité (4) comprennent un module d'activation apte à activer un signal d'indisponibilité du rapport de transmission affiché au tableau de bord pendant un délai de temporisation si le rapport de transmission affiché est globalement indisponible.

4. Système selon l'une des revendications 1 à 3, **caractérisé en ce que** les moyens de commande de l'affichage (3) du rapport de transmission au tableau de bord comprennent un module de temporisation apte à commander l'affichage du rapport de transmission réellement appliqué à l'issue d'un délai de temporisation si le rapport de transmission brut est indisponible.

5. Procédé de commande de l'affichage au tableau de bord des rapports de transmission d'un véhicule automobile équipé d'une boîte de vitesse automatique et d'un système de commande des rapports de transmission recevant des informations relatives aux rapports de transmission indisponibles, le procédé comprenant une commande de l'affichage du rapport de transmission au tableau de bord, et une commande d'un affichage d'indisponibilité (4) du rapport de transmission affiché (R_{affiché}) au tableau de bord, **caractérisé en ce qu'**il comprend une mise en phase les signaux utilisés pour la détermination du rapport de transmission à afficher au tableau de bord avec le signal relatif au rapport réellement applique (R_{appliqué}) et le signal relatif au rapport de transmission brut (R_{brut}), les signaux utilisés pour la détermination du rapport de transmission à afficher au tableau de bord comprenant un signal relatif au rapport de transmission demandé (R_{dips}), un signal booléen indiquant qu'une demande de changement de rapport de transmission est mémorisé (Mem), un signal booléen indiquant une impulsion sur les palettes pour une demande d'un rapport de transmission montant (Paddle_up), un signal booléen indiquant une impulsion sur le levier pour une demande d'un rapport de transmission montant (Lvr_up), un signal booléen indiquant une impulsion sur les palettes pour une demande d'un rapport de transmission rétrograde (Paddle_dwn), un signal booléen indiquant une impulsion sur le levier pour une demande d'un rapport de transmission rétrograde (Lvr_dwn).

6. Procédé selon la revendication la revendication 5, **caractérisé en ce qu'**il comprend une sélection du rapport de transmission à afficher en fonction de la disponibilité du rapport de transmission demandé (R_{disp}).

7. Procédé selon l'une des revendications 5 ou 6, **caractérisé en ce qu'**il comprend une activation d'un signal d'indisponibilité (Indisponible) du rapport de transmission affiché (R_{affiché}) au tableau de bord pendant un délai de temporisation si le rapport de transmission affiché (R_{affiché}) est globalement indisponible.

8. Procédé selon l'une des revendications 5 à 7, **caractérisé en ce qu'**il comprend une commande de l'affichage du rapport de transmission réellement appliqué (R_{appliqué}) à l'issue d'un délai de temporisation si le rapport de transmission brut (R_{brut}) est indisponible.

## Patentansprüche

1. System zur Steuerung der Armaturenbrettanzeige der Übersetzungsverhältnisse eines mit einem Automatikgetriebe und mit einem Steuersystem der Übersetzungsverhältnisse ausgestatteten Kraftfahrzeugs, das Informationen bezüglich der nicht verfügbaren Übersetzungsverhältnisse empfängt, wobei das Steuersystem der Anzeige Steuereinrichtungen der Anzeige (3) des Übersetzungsverhältnisses auf dem Armaturenbrett und Steuereinrichtungen der Anzeige (4) der Nichtverfügbarkeit des auf dem Armaturenbrett angezeigten Übersetzungsverhältnisses enthält, **dadurch gekennzeichnet, dass** es Einrichtungen zur vorbereitenden Verarbeitung 1 enthält, die die zur Bestimmung des auf dem Armaturenbrett anzuzeigenden Übersetzungsverhältnisses verwendeten Signale mit dem Signal bezüglich des tatsächlich angewendeten Verhältnisses (R_{appliqué}) und dem Signal bezüglich des unbearbeiteten Übersetzungsverhältnisses (R_{brut}) phasenabgleichen kann, wobei die zur Bestimmung des auf dem Armaturenbrett anzuzeigenden Übersetzungsverhältnisses verwendeten Signale ein Signal bezüglich des angeforderten Übersetzungsverhältnisses (R_{disp}), ein Boolesches Signal, das anzeigt, dass eine Übersetzungsverhältnis-Änderungsanforderung gespeichert ist (Mem), ein Boolesches Signal, das einen Impuls auf der Schaltwippe für eine Anforderung eines Hochschalt-Übersetzungsverhältnisses (Paddle_up) anzeigt, ein Boolesches Signal, das einen Impuls auf dem Hebel für eine Anforderung eines Hochschalt-Übersetzungsverhältnisses (Lvr_up) anzeigt, ein Boolesches Signal, das einen Impuls auf den Schaltwippen für eine Anforderung eines Herunterschalt-Übersetzungsverhältnisses (Paddle dwn) anzeigt, ein Boolesches Signal, das einen Impuls auf dem Hebel für eine Anforderung eines Herunterschalt-Übersetzungsverhältnisses (Lvr_dwn) anzeigt, enthalten.

2. System nach Anspruch 1, **dadurch gekennzeichnet, dass** es Auswahleinrichtungen (2) des anzuzeigenden Übersetzungsverhältnisses abhängig von der Verfügbarkeit des angeforderten Übersetzungsverhältnisses (R_{disp}) enthält.

3. System nach einem der Ansprüche 1 oder 2, **dadurch gekennzeichnet, dass** die Steuereinrichtungen der Nichtverfügbarkeitsanzeige (4) ein Aktivierungsmodul enthalten, das ein Nichtverfügbarkeitssignal des auf dem Armaturenbrett angezeigten Übersetzungsverhältnisses während einer Verzögerungszeit aktivieren kann, wenn das angezeigte Übersetzungsverhältnis global nicht verfügbar ist.

4. System nach einem der Ansprüche 1 bis 3, **dadurch gekennzeichnet, dass** die Steuereinrichtungen der Anzeige (3) des Übersetzungsverhältnisses auf dem Armaturenbrett ein Verzögerungsmodul enthalten, das die Anzeige des tatsächlich angewendeten Übersetzungsverhältnisses nach einer Verzögerungszeit steuern kann, wenn das unbearbeitete Übersetzungsverhältnis nicht verfügbar ist.

5. Verfahren zum Steuern der Armaturenbrettanzeige des Übersetzungsverhältnisse eines mit einem Automatikgetriebe und mit einem Steuersystem der Übersetzungsverhältnisse ausgestatteten Kraftfahrzeugs, das Informationen bezüglich der nicht verfügbaren Übersetzungsverhältnisse empfängt, wobei das Verfahren eine Steuerung der Anzeige des Übersetzungsverhältnisses auf dem Armaturenbrett und eine Steuerung einer Nichtverfügbarkeitsanzeige (4) des angezeigten Übersetzungsverhältnisses (R_{affiché}) auf dem Armaturenbrett enthält, **dadurch gekennzeichnet, dass** es einen Phasenabgleich der für die Bestimmung des auf dem Armaturenbrett anzuzeigenden Übersetzungsverhältnisses verwendeten Signale mit dem Signal bezüglich des tatsächlich angewendeten Verhältnisses (R_{appliqué}) und dem Signal bezüglich des unbearbeiteten Übersetzungsverhältnisses (R_{brut}) enthält, wobei die zur Bestimmung des auf dem Armaturenbrett anzuzeigenden Übersetzungsverhältnisses verwendeten Signale ein Signal bezüglich des angeforderten Übersetzungsverhältnisses (R_{disp}), ein Boolesches Signal, das anzeigt, dass eine Übersetzungsverhältnis-Änderungsanforderung gespeichert ist (Mem), ein Boolesches Signal, das einen Impuls auf den Schaltwippen für eine Anforderung eines Hochschalt-Übersetzungsverhältnisses (Paddle_up) anzeigt, ein Boolesches Signal, das einen Impuls auf dem Hebel für eine Anforderung eines Hochschalt-Übersetzungsverhältnisses (Lvr_up) anzeigt, ein Boolesches Signal, das einen Impuls auf den Schaltwippen für eine Anforderung eines Herunterschalt-Übersetzungsverhältnisses (Paddle_dwn) anzeigt, ein Boolesches Signal, das einen Impuls auf dem Hebel für eine Anforderung eines Herunterschalt-Übersetzungsverhältnisses (Lvr_dwn) anzeigt, enthält.

6. Verfahren nach Anspruch 5, **dadurch gekennzeichnet, dass** es eine Auswahl des anzuzeigenden Übersetzungsverhältnisses abhängig von der Verfügbarkeit des angeforderten Übersetzungsverhältnisses (R_{disp}) enthält.

7. Verfahren nach einem der Ansprüche 5 oder 6, **dadurch gekennzeichnet, dass** es eine Aktivierung eines Nichtverfügbarkeitssignals (Indisponible) des auf dem Armaturenbrett angezeigten Übersetzungsverhältnisses (R_{affiché}) während einer Verzögerungszeit enthält, wenn das angezeigte Übersetzungsverhältnis (R_{affiché}) global nicht verfügbar ist.

8. Verfahren nach einem der Ansprüche 5 bis 7, **dadurch gekennzeichnet, dass** es eine Steuerung der Anzeige des tatsächlich angewendeten Übersetzungsverhältnisses (R_{appliqué}) nach einer Verzögerungszeit enthält, wenn das unbearbeitete Übersetzungsverhältnis (R_{brut}) nicht verfügbar ist.

## Claims

1. System for controlling the dashboard display of the transmission ratios of a motor vehicle equipped with an automatic gearbox and a system for controlling transmission ratios which receives information relating to the unavailable transmission ratios, the display control system including means for controlling the dashboard display (3) of the transmission ratio, and means for controlling the display of unavailability (4) of the transmission ratio displayed on the dashboard, **characterized in that** it includes preliminary processing means 1 capable of phasing the signals used for determining the transmission ratio to be displayed on the dashboard with the signal relating to the ratio actually applied (R_{appliqué}) and the signal relating to the raw transmission ratio (R_{brut}), the signals used for determining the transmission ratio to be displayed on the dashboard including a signal relating to the requested transmission ratio (R_{disp}), a Boolean signal indicating that a request for a change of transmission ratio is stored (Mem), a Boolean signal indicating a pressure on the paddles for a request for an upshift transmission ratio (Paddle_up), a Boolean signal indicating a pressure on the lever for a request for an upshift transmission ratio (Lvr_up), a Boolean signal indicating a pressure on the paddles for a request for a downshift transmission ratio (Paddle_dwn), a Boolean signal indicating a pressure on the lever for a request for a downshift transmission ratio (Lvr_dwn).

2. System according to Claim 1, **characterized in that** it includes means for selecting (2) the transmission ratio to be displayed according to the availability of the requested transmission ratio (R_{disp}).

3. System according to either of Claims 1 and 2, **characterized in that** the means for controlling the display of unavailability (4) include an activation module capable of activating a signal of unavailability of the transmission ratio displayed on the dashboard during a time delay if the displayed transmission ratio is globally unavailable.

4. System according to one of Claims 1 to 3, **characterized in that** the means for controlling the dashboard display (3) of the transmission ratio include a time delay module capable of controlling the display of the transmission ratio actually applied at the end of a time delay if the raw transmission ratio is unavailable.

5. Method for controlling the dashboard display of the transmission ratios of a motor vehicle equipped with an automatic gearbox and a system for controlling the transmission ratios which receives information relating to the unavailable transmission ratios, the method including a control for displaying the transmission ratio on the dashboard, and a control for displaying unavailability (4) of the transmission ratio displayed (R_{affiché}) on the dashboard, **characterized in that** it includes a phasing of the signals used for determining the transmission ratio to be displayed on the dashboard with the signal relating to the ratio actually applied (R_{appliqué}) and the signal relating to the raw transmission ratio (R_{brut}), the signals used for determining the transmission ratio to be displayed on the dashboard including a signal relating to the requested transmission ratio (R_{disp}), a Boolean signal indicating that a request for a change of transmission ratio is stored (Mem), a Boolean signal indicating a pressure on the paddles for a request for an upshift transmission ratio (Paddle_up), a Boolean signal indicating a pressure on the lever for a request for an upshift transmission ratio (Lvr_up), a Boolean signal indicating a pressure on the paddles for a request for a downshift transmission ratio (Paddle_dwn), a Boolean signal indicating a pressure on the lever for a request for a downshift transmission ratio (Lvr_dwn).

6. Method according to Claim 5, **characterized in that** it includes selecting the transmission ratio to be displayed according to the availability of the requested transmission ratio (R_{disp}).

7. Method according to either of Claims 5 and 6, **characterized in that** it includes activation of a signal of unavailability (Indisponible) of the transmission ratio displayed (R_{affiché}) on the dashboard during a time delay if the transmission ratio displayed (R_{affiché}) is globally unavailable.

8. Method according to one of Claims 5 to 7, **characterized in that** it includes a control for displaying the transmission ratio actually applied (R_{appliqué}) at the end of a time delay if the raw transmission ratio (R_{brut}) is unavailable.
